# EUROPÄISCHE PATENTSCHRIFT

(11) **EP 0 531 855 B1**
(45) Veröffentlichungstag und Bekanntmachung des Hinweises auf die Patenterteilung: **07.01.1998**
(21) Anmeldenummer: 92114896.1
(22) Anmeldetag: 01.09.1992
(51) Int. Cl.: B01D 19/00, C02F 1/20, B09B 3/00, C02F 3/22

(54) **Vorrichtung zum Reinigen von Grundwasser durch Strippen mit einem Gas, insbesondere Luft**
Device for the purification of ground water, by stripping with a gas, particularly air
Dispositif pour la purification des eaux souterraines par extraction avec un gaz, en particulier de l'air

(30) Priorität: 05.09.1991 DE 4129511
(43) Veröffentlichungstag der Anmeldung: 17.03.1993
(60) Teilanmeldung: 97105480.4
(73) Patentinhaber: Ed. Züblin Aktiengesellschaft, D-70567 Stuttgart (DE)
(72) Erfinder: Hager, Eberhard, W-7000 Stuttgart 30 (DE); Högg, Peter, W-7000 Stuttgart 1 (DE)
(74) Vertreter: Wasmuth, Rolf, Dipl.-Ing.

(56) Entgegenhaltungen:
- EP-A- 0 242 280
- EP-A- 0 242 665
- EP-A- 0 418 572
- DE-U- 9 005 565
- US-A- 4 609 385
- TECHNISCHE RUNDSCHAU Bd. 77, Nr. 46, November 1985, BERN Seiten 64 - 67 HANNS BENNINGHOFF 'LEICHTFLÜCHTIGE KOHLENWASSERSTOFFE: STAND DER ABWASSERTECHNIK'

## Beschreibung

Die Erfindung betrifft eine Vorrichtung zum Reinigen von Grundwasser durch Strippen mit einem Gas, insbesondere Luft, nach dem Oberbegriff des Anspruchs 1.

Zur Reinigung von Grundwasser ist es bekannt, über Tage das Wasser durch Strippen mit Gas, insbesondere Luft, zu reinigen. Mit der durch das Wasser geführten Luft werden leicht flüchtige Verunreinigungen ausgetragen.

Eine aus der DE-U 90 05 565 bekannte Vorrichtung weist ein Brunnenrohr auf, das aus einem Förderrohr und einem das Förderrohr umgebenden Mantelrohr größeren Durchmessers zusammengesetzt ist. Im unteren Endabschnitt des Förderrohres liegt ein Wasserzulauf, durch den das zu reinigende Grundwasser der Vorrichtung zugeführt ist. Nach der Reinigung verläßt das Grundwasser die Vorrichtung über den im unteren Endabschnitt des Mantelrohres ausgebildeten Wasserablauf. In das Förderrohr mündet ein Injektorrohr zum Zuführen von Strippgas, welches nach Durchströmen des Wassers in einem zwischen dem Förderrohr und dem Mantelrohr liegenden ringförmigen Trennraum austritt. Der als Ringraum ausgebildete Trennraum ist vom Außenmantel des Förderrohres sowie vom Innenmantel des Mantelrohres begrenzt und von einem Deckel verschlossen, der einen Abluftstutzen für das Strippgas trägt.

Der als Trennraum genutzte Ringraum ist sehr eng und hat ein geringes Volumen. Zur Erzielung einer hohen Reinigungsleistung muß aber ein hoher Luftdurchsatz sichergestellt werden, wobei sich im Ringraum hohe Strömungsgeschwindigkeiten ergeben, die ein Mitreißen des Wassers in den Ablaufstutzen bewirken können. Um dies zu verhindern, kann der Luftdurchsatz nicht erhöht werden, so daß die Leistung der Vorrichtung zum Reinigen von Grundwasser beschränkt ist.

Aus der EP-A 0 418 572 ist eine Vorrichtung bekannt, bei der ein einziges zylindrisches Rohr das Brunnenrohr bildet. Der Wasserzulauf ist im unteren Endabschnitt des zylindrischen Rohres vorgesehen; der Wasserablauf liegt unterhalb des Trennraumes und unterhalb des Grundwasserspiegels in einem oberen Bereich des Rohres. Um einen ausreichenden Wasserstrom vom Wasserzulauf zum Wasserablauf zu erhalten, ist eine Pumpe angeordnet, die das Wasser einer Verwirbelungszone zuführt, in welche das Strippgas eingeleitet ist. Der Aufbau der Vorrichtung ist aufwendig, benötigt einen großen Bauraum und hat einen hohen Energiebedarf.

Der Erfindung liegt die Aufgabe zugrunde, eine Vorrichtung zum Reinigen von Grundwasser durch Strippen mit einem Gas derart weiterzubilden, daß bei hoher Reinigungswirkung und konstruktiv einfachem Aufbau ein nur geringer Energiebedarf zum Betrieb des Brunnens notwendig ist.

Diese Aufgabe wird erfindungsgemäß nach den kennzeichnenden Merkmalen des Anspruchs 1 gelöst.

Der angegebene Aufbau der Vorrichtung macht einen näherungsweise zylindrischen Trennraum möglich, so daß bei ansonsten unveränderter äußerer Baugröße ein deutlich größeres Trennraumvolumen geschaffen ist. Aus dem zylindrischen Trennraum kann das aus dem Wasser ausgetretene Strippgas bei kleinen Wegstrecken unmittelbar abgeführt werden, so daß hohe Strömungsgeschwindigkeiten vermieden sind. Bei unveränderten Außenmaßen und unter Vermeidung hoher Strömungsgeschwindigkeiten ist ein größerer Luftdurchsatz und damit eine Leistungssteigerung der Vorrichtung möglich.

Das Einbringen des Strippgases unter Überdruck dient der Unterstützung der Grundwasserströmung vom Wasserzulauf zum Wasserablauf nach Art eines Druckluftwasserhebers. Durch die Einstellung des Druckes kann die gewünschte Fördermenge für den erforderlichen Grundwasserstrom bestimmt werden.

Weitere Merkmale der Erfindung ergeben sich aus den weiteren Ansprüchen, der Beschreibung und der Zeichnung, in der nachstehend im einzelnen beschriebene Ausführungsbeispiele der Erfindung dargestellt sind. Es zeigen:
- Fig. 1: in schematischer Darstellung einen aus drei koaxial zueinander liegenden Rohren bestehenden Brunnen zum Reinigen von Grundwasser,
- Fig. 2: in schematischer Darstellung einen Brunnen gemäß Fig. 1 mit außermittig angeordnetem Injektorrohr,
- Fig. 3: in schematischer Darstellung einen Brunnen gemäß Fig. 1 mit einer Injektorpumpe,
- Fig. 4: in schematischer Darstellung einen Brunnen gemäß Fig. 1 mit einer mechanischen Förderpumpe,
- Fig. 5: in schematischer Darstellung einen Brunnen gemäß Fig. 5 mit geänderter Zuführung der Strippluft.

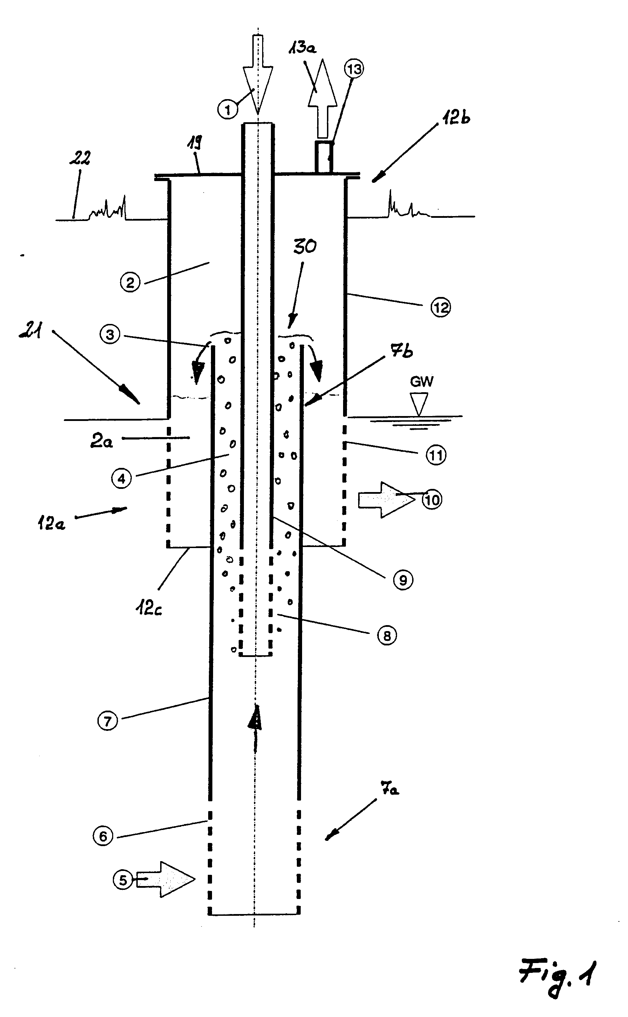

Der Brunnen gemäß Fig. 1 besteht im wesentlichen aus drei koaxial zueinander liegenden, zylindrischen Rohren. Das Brunnenrohr 21 ist lotrecht im Boden 22 abgeteuft und besteht aus einem zentralen Förderrohr 7 und einem Mantelrohr 12. Das Förderrohr 7 ist länger als das Mantelrohr 12 ausgebildet und weist in seinem unteren Endabschnitt 7a einen Wasserzulauf 6 auf, der aus in die Wandung des Förderrohres 7 eingebrachten Bohrungen gebildet sein kann. Die Bohrungen sind in Umfangsrichtung in einer Reihe nebeneinander angeordnet, wobei mehrere Reihen übereinander vorgesehen sind.

Das obere Ende 30 des Förderrohrs 7 ist offen ausgebildet und wird von dem Mantelrohr 12 übergriffen, welches aus dem Boden 22 herausragt. Zwischen dem oberen Endabschnitt 7b des Förderrohrs 7 und dem Mantelrohr 12 ist ein Ringraum 2a ausgebildet. Das untere Ende 12a des Mantelrohres 12 weist einen Wasserablauf 11 auf, der entsprechend dem Wasserzulauf 6 im Förderrohr 7 ausgebildet sein kann. Der Wasserzulauf 6 wie der Wasserablauf 11 weisen eine Verfilterung auf, über die das Wasser gefiltert zu- bzw. abströmt.

Das obere Ende 12b des Mantelrohres 12 ist durch einen Deckel 19 luftdicht verschlossen. Der Luftdeckel 19 liegt mit axialem Abstand zur Überlaufkante 3 des offenen Endes 30 des Förderrohres 7 und begrenzt einen im Mantelrohr 12 vorgesehenen Trennraum 2.

Der Wasserablauf 11 liegt zumindest teilweise, bevorzugt vollständig unterhalb des Grundwasserspiegels GW. Die Kante 3 des offenen Endes 30 des Förderrohres 7 liegt oberhalb des Grundwasserspiegels GW, ebenso der Trennraum 2.

Zentral im Förderohr 7 mündet ein im Durchmesser kleiner ausgebildetes Injektorrohr 9, welches im Deckel 19 zentral gehalten ist. Das Injektorrohr 9 mündet unterhalb des Grundwasserspiegels GW in das Förderrohr 7, bevorzugt in einer Ebene unterhalb der unteren Kante 12c des Mantelrohres 12. Der Endabschnitt 8 des Injektorrohres 9 ist ähnlich einer Siebwandung ausgebildet und kann an seinem offenen Ende verschlossen sein. Anstelle einer gelochten Siebwandung kann der Endabschnitt auch in eine Einzeldüse münden.

Über das Injektorrohr 9 wird in Pfeilrichtung 1 ein Strippgas, vorzugsweise Druckluft, zugeführt, welches durch den gelochten Endabschnitt 8 in das im Förderrohr 7 stehende Grundwasser austritt. Die Druckluft entspannt sich und steigt in dem durch das Injektorrohr 9 und das Förderrohr 7 begrenzten Ringraum nach oben, der den Strippbereich 4 bildet. Die aufsteigende Luft reißt Wasser mit, welches am offenen Ende 30 über die Überlaufkante 3 in den Ringraum 2a des Mantelrohres 12 eintritt und über den Wasserablauf 11 abfließt. Auf diese Weise wird Grundwasser in Pfeilrichtung 5 durch den Wasserzulauf 6 in das Förderrohr 7 einströmen, zum Strippbereich 4 aufsteigen, in den Ringraum 2a übertreten und in Pfeilrichtung 10 über den Wasserablauf 11 abströmen.

Die über das Injektorrohr 9 in Pfeilrichtung 1 unter Druck zugeführte Strippluft trägt leicht flüchtige Verunreinigungen wie chlorierte Kohlenwasserstoffe und Ähnliches aus dem Grundwasser aus und steigt in den Trennraum 2 auf, in dem etwa Umgebungsluftdruck herrscht. Von dort wird über den außermittig im Deckel 19 liegenden Luftaustritt 13 die Strippluft zusammen mit den Verunreinigungen abgesaugt.

Die unter Überdruck eingebrachte Strippluft stellt einen ausreichenden Luftdurchsatz sicher und gewährleistet gleichzeitig eine ausreichende Strömung vom Wasserzulauf 6 zum Wasserablauf 11. Die Höhe der Überlaufkante 3 wird so gewählt, daß sich ein günstiges Verhältnis zwischen der Förderhöhe und dem Trennraum ergibt, um eine optimale Trennung von Wasser und Luft sicherzustellen.

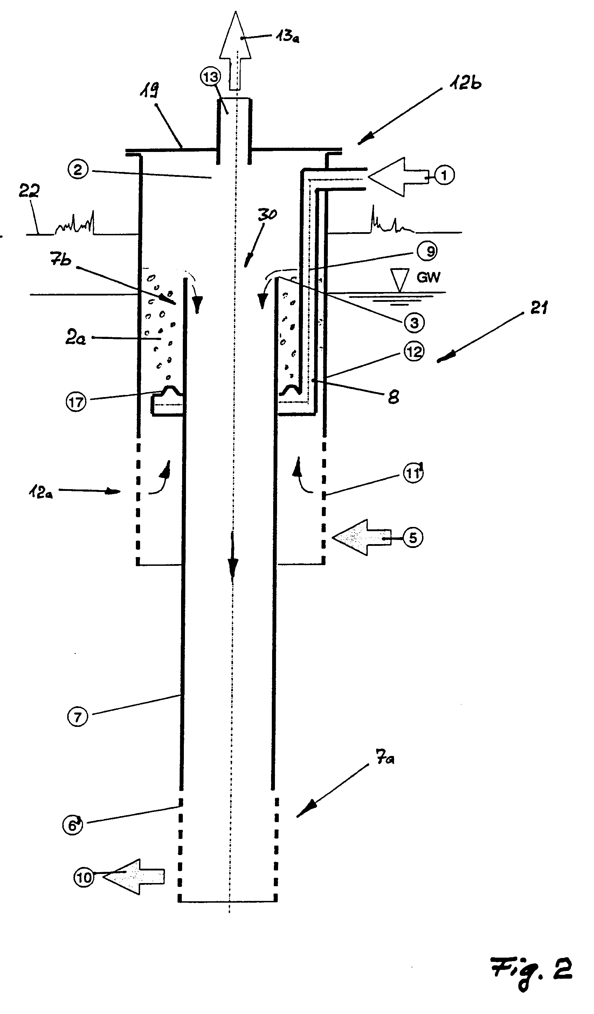

Der in den weiteren Ausführungsbeispielen nach den Fig. 2 bis 6 gezeigte Brunnen entspricht im Grundaufbau dem nach Fig. 1, weshalb für gleiche Teile gleiche Bezugszeichen verwendet sind.

Im Ausführungsbeispiel nach Fig. 2 ist anstelle eines zentralen Injektorrohres das Injektorrohr 9 in den Ringraum 2a zwischen Mantelrohr 12 und Förderrohr 7 geführt. Unterhalb des Grundwasserspiegels GW ist ein Luftverteiler 17 nach Art einer Ringdüse oder dgl. vorgesehen, an die der Endabschnitt 8 des Injektorrohres 9 angeschlossen ist. Die Überlaufkante 3 am offenen Ende 30 des Förderrohres 7 liegt nur geringfügig höher als der Grundwasserspiegel GW.

Wird in Pfeilrichtung 1 durch das Injektorrohr 9 Druckluft eingeblasen, so wird diese gleichmäßig über die Fläche des Ringraums zwischen Mantelrohr 12 und Förderrohr 7 verteilt aufsteigen und dabei Wasser mitfördern, welches über die Überlaufkante 3 in das Förderrohr 7 abfließt. Die Strippluft tritt zusammen mit den Verunreinigungen in den etwa druckausgeglichenen Trennraum 2 aus und wird über den Luftaustritt 13 in Pfeilrichtung 13a abgezogen.

Aufgrund der gegenüber dem Ausführungsbeispiel nach Fig. 1 geänderten Strömungsrichtung fließt das Grundwasser über die Öffnungen 11' im Mantelrohr 12 in Pfeilrichtung 5 zu und über die im unteren Ende des Förderrohrs 7 vorgesehenen Öffnungen 6' in Pfeilrichtung 10 ab; Der Wasserzulauf liet also oberhalb des Wasserablaufs, wodurch insbesondere Verunreinigungen des Grundwassers im Bereich des Grundwasserspiegels beseitigt werden können.

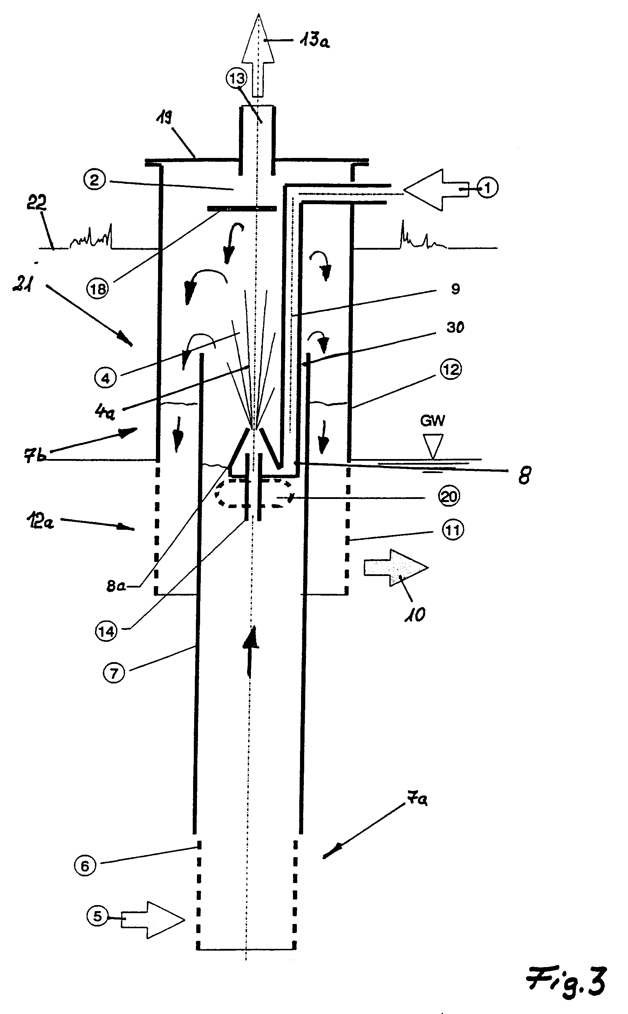

Beim Ausführungsbeispiel gemäß Fig. 3 ist zentral im Förderrohr 7 eine Injektorpumpe 8a angeordnet, die mit dem Endabschnitt 8 des Injektorrohres 9 verbunden ist. Die Injektorpumpe 8a steht mit ihrer Düse aus dem Grundwasserspiegel GW heraus; ihr Ansaugrohr 14 ragt - zentral im Förderrohr 7 liegend - in Richtung auf den Endabschnitt 7b unter den Grundwasserspiegel GW. Vorteilhaft ist die Injektorpumpe 8a auf einem Schwimmkörper 20 angeordnet, um wechselnde Grundwasserspiegel GW auszugleichen. Die Zuleitung der Druckluft erfolgt dann vorzugsweise über eine flexible Rohrleitung. Die unter Druck in Pfeilrichtung 1 zugeführte Strippluft dient als Antriebsgas der Injektorpumpe, welche über das Ansaugrohr 14 Wasser aus dem Förderrohr 7 ansaugt. Der bzw. die Flüssigkeits- bzw. Gemischstrahlen 4a der Injektorpumpe 8a sind aufrecht gegen den Deckel 19 gerichtet und treffen auf eine im Trennraum 2 angeordnete Prallplatte 18. Durch die Injektorpumpe wird eine innige Vermischung der zugeführten Strippluft mit dem zu reinigenden Wasser erzielt, wobei durch die Prallplatte 18 eine starke weitere Verwirbelung der Wasser/Luft-Mischung erfolgt, was hohe Wirkungsgrade gewährleistet. Falls erforderlich, kann im Förderrohr 7 oder im Mantelrohr 12 ein zusätzlicher Luftverteiler zur Zuführung von Strippluft vorgesehen sein. Die Injektorpumpe 8a eignet sich hierbei als wartungsfreie, funktionssichere Flüssigkeitspumpe. Im Trennraum 2 herrscht vorzugsweise Atmosphärendruck. Es kann auch zweckmäßig sein, einen Über- oder Unterdruck im Trennraum 2 einzustellen.

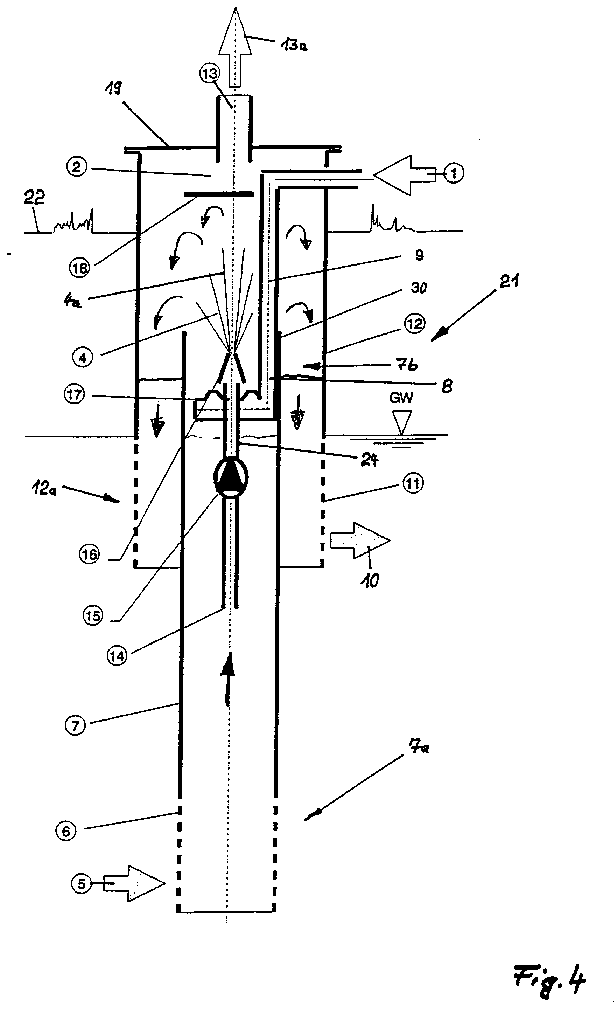

Das Ausführungsbeispiel nach Fig. 4 entspricht im wesentlichem dem nach Fig. 3. Zentral im Förderrohr 7 ist anstelle der Injektorpumpe 8a eine konventionelle, mechanische Flüssigkeitspumpe 15 angeordnet, deren Saugrohr 14 dem unteren Ende 7a des Förderohrs 7 zugewandt liegt. Das Druckrohr 24 mündet in eine Sprühdüse 16, deren Flüssigkeitsstrahlen 4a aufrecht nach oben gegen die Prallplatte 18 gerichtet sind. Der Trennraum 2 kann unter Atmosphärendruck, Überdruck oder Unterdruck gehalten werden.

Konzentrisch zum Druckrohr 7 liegt unterhalb der Düse 16 ein Luftverteiler 17, der mit dem Endabschnitt 8 des Injektorrohrs 9 verbunden ist. Der Luftverteiler 17 liegt oberhalb des Grundwasserspiegels; aus ihm tritt die Strippluft in gleicher Strömungsrichtung aus wie das Wasser aus der Düse 16. Die feine Wasserverteilung durch die Düse 16 wie die starke Verwirbelung aufgrund der Prallplatte 18 ermöglichen einen innigen Kontakt der aufsteigenden Strippluft mit dem Wasser, so daß ein hoher Wirkungsgrad gegeben ist.

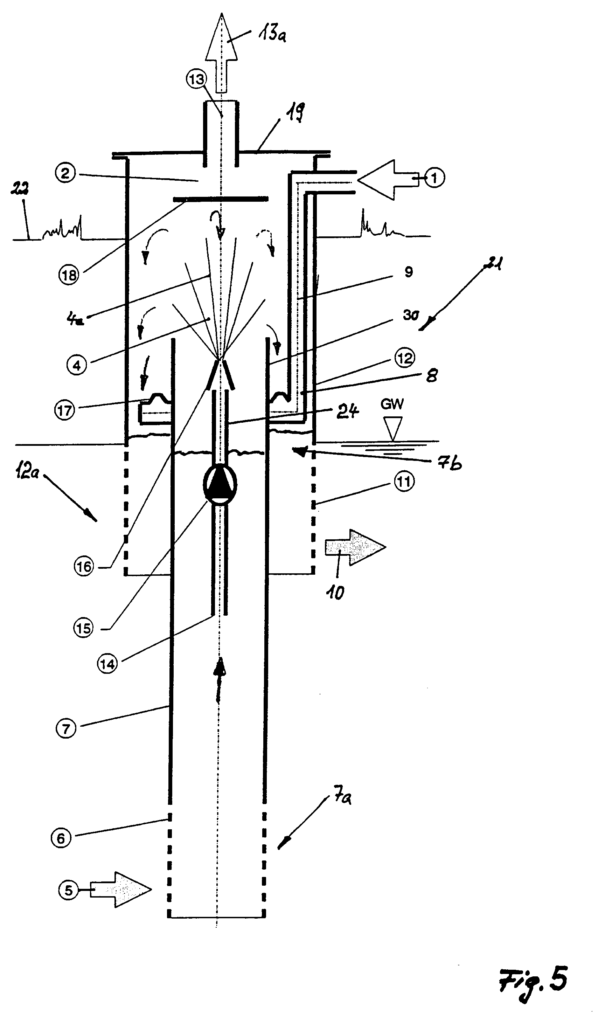

Das Ausführungsbeispiel gemäß Fig. 5 entspricht dem nach Fig. 4; der Luftverteiler 17 ist nunmehr im Ringraum zwischen Förderrohr 7 und Mantelrohr 12 angeordnet und steht - entsprechend der Darstellung in Fig. 4 - mit dem Injektorrohr 9 in Verbindung. Die Strömungsrichtung der aus dem Luftverteiler 17 austretenden Strippluft steht nun im Gegenstrom zu der von der Prallplatt 18 in den Ringraum zwischen Förderrohr und Mantelrohr fallenden Flüssigkeit. Durch dieses Gegenstromprinzip ist eine innige Vermischung zwischen dem zu reinigenden Grundwasser und der Strippluft gewährleistet. Die Ausführungsformen nach den Fig. 4 und 5 haben den Vorteil, daß einerseits die geförderte Wassermenge über die Pumpe 15 und andererseits die durch das Injektorrohr 9 zugeführte Menge der Strippluft einstellbar ist. Dabei ist auch der Druck der zugeführten Strippluft frei einstellbar, so daß die Vorrichtung auf optimale Wirkung bei geringem Energiebedarf eingeregelt werden kann.

## Patentansprüche

1. Vorrichtung zum Reinigen von Grundwasser durch Strippen mit einem Gas, insbesondere Luft, mit einem aus einem Förderrohr (7) und einem das Förderrohr umgebenden Mantelrohr (12) gebildeten Brunnenrohr (21), wobei das Förderrohr (7) länger als das Mantelrohr (12) ausgebildet ist, mit einem im unteren Endabschnitt (7a) des Förderrohrs (7) liegenden Wasserzulauf (6) und einem im unteren Endabschnitt (12a) des Mantelrohres (12) ausgebildeten Wasserablauf (11) sowie einer Anordnung zur Aufrechterhaltung eines Grundwasserstroms vom Wasserzulauf (6) zum Wasserablauf (11) sowie mit einem in das Brunnenrohr (21) mündenden Druckrohr als Injektorrohr (9), durch dessen Endabschnitt (8) Strippgas zuführbar ist und mit einem am oberen Ende (12b) des Mantelrohrs (12) ausgebildeten Trennraum (2), der von einem das obere Ende (12b) des Mantelrohres (12) verschließenden Deckel (19) begrenzt ist, wobei das Strippgas in den Trennraum (2) aufsteigt und über einen Luftaustritt (13) abführbar ist,
dadurch gekennzeichnet, daß das Förderrohr (7) an seinem oberen Ende (30) offen ist und der Deckel (19) des geschlossenen Endes (12b) des Mantelrohres (12) mit axialem Abstand zur Überlaufkante (3) des offenen Endes (30) des Förderrohres (7) liegt.

2. Vorrichtung nach Anspruch 1,
dadurch gekennzeichnet, daß der Wasserablauf (11) vorzugsweise vollständig unterhalb des Grundwasserspiegels (GW) liegt.

3. Vorrichtung nach Anspruch 1 oder 2,
dadurch gekennzeichnet, daß das Injektorrohr (9) unterhalb des Grundwasserspiegels (GW), vorzugsweise unterhalb des unteren Endes (12a) des Mantelrohres (12) koaxial im Förderrohr (7) mündet.

4. Vorrichtung nach Anspruch 1 oder 2,
dadurch gekennzeichnet, daß der Endabschnitt (8) des Injektorrohres (9) im Ringraum zwischen Förderrohr und Mantelrohr unterhalb des Grundwasserspiegels (GW) mündet, vorzugsweise an einen Luftverteiler (17) angeschlossen ist, wobei insbesondere die Kante (3) des offenen Förderrohrendes (30) geringfügig höher als der Grundwasserspiegel (GW) liegt.

5. Vorrichtung nach Anspruch 1 oder 2,
dadurch gekennzeichnet, daß die Anordnung aus einer vorzugsweise im Förderrohr (7) angeordneten Flüssigkeitspumpe (8a, 15) gebildet ist.

6. Vorrichtung nach Anspruch 5,
dadurch gekennzeichnet, daß die Pumpe als Injektorpumpe (8a) ausgebildet ist, der das Strippgas als Antriebsmittel zugeführt ist und die Injektorpumpe (8a) vorzugsweise von einem Schwimmkörper (20) getragen ist.

7. Vorrichtung nach Anspruch 5,
dadurch gekennzeichnet, daß die Pumpe eine mechanische Pumpe (15) ist, deren Druckrohr (24) in einer Düse (16) endet.

8. Vorrichtung nach einem der Ansprüche 5 bis 7,
dadurch gekennzeichnet, daß der Strahl (4a) der Flüssigkeitspumpe (8a, 15) gegen eine vorzugsweise oberhalb des Förderrohrendes (30) angeordnete Prallplatte (18) gerichtet ist, wobei die Prallplatte (18) insbesondere im Trennraum (2) liegt.

## Claims

1. Device for the purification of ground water by stripping with a gas, particularly air, with a borehole tube (21) formed from a conveying tube (7) and a casing (12) surrounding the conveying tube, the conveying tube (7) having a longer construction than the casing (12), with a water inlet (6) lying in the lower end section (7a) of the conveying tube (7) and a water outlet (11) constructed in the lower end section (12a) of the casing (12) as well as an arrangement for maintaining a ground water flow from the water inlet (6) to the water outlet (11) as well as with a pressure tube opening into the borehole tube (21) as an injector tube (9), through the end section (8) of which stripping gas can be supplied and with a separating chamber (2) formed at the upper end (12b) of the casing (12), which is defined by a cover (19) closing off the upper end (12b) of the casing (12), the stripping gas ascending in the separating chamber (2) and able to be discharged by way of an air outlet (13), characterised in that the conveying tube (7) is open at its upper end (30) and the cover (19) of the closed end (12b) of the casing (12) lies at an axial distance from the overflow edge (3) of the open end (30) of the conveying tube (7).

2. Device according to Claim 1, characterised in that the water outlet (11) is preferably located completely below the ground water level (GW).

3. Device according to Claim 1 or 2, characterised in that the injector tube (9) opens out coaxially in the conveying tube (7) below the ground water level (GW), preferably below the lower end (12a) of the casing (12).

4. Device according to Claim 1 or 2, characterised in that the end section (8) of the injector tube (9) opens out in the annular space between the conveying tube and casing below the ground water level (GW) preferably it is connected to an air distributor (17), in particular the edge (3) of the open conveying tube end (30) lying slightly higher than the ground water level (GW).

5. Device according to Claim 1 or 2, characterised in that the arrangement is formed from a liquid pump (8a, 15) preferably located in the conveying tube (7).

6. Device according to Claim 5, characterised in that the pump is constructed as an injector pump (8a), to which the stripping gas is supplied as drive medium and the injector pump (8a) is preferably carried by a float member (20).

7. Device according to Claim 5, characterised in that the pump is a mechanical pump (15), whereof the pressure tube (24) terminates in a nozzle (16).

8. Device according to one of Claims 5 to 7, characterized in that the jet (4a) from the liquid pump (8a, 15) is directed towards a baffle plate (18) preferably located above the conveying tube end (30), the baffle plate (18) being located in particular in the separating chamber (2).

## Revendications

1. Dispositif pour nettoyer une eau souterraine par extraction avec un gaz, notamment de l'air, comportant un tube formant puits (21) formé par un tube de convoyage (7) et un tube enveloppe (12) entourant le tube de convoyage, le tube de convoyage (7) étant plus long que le tube enveloppe (12), et comportant une arrivée pour l'eau (6) située dans la section d'extrémité inférieure (7a) du tube de convoyage (7), et une sortie pour l'eau (11), formée dans la section d'extrémité inférieure (12a) du tube enveloppe (12), ainsi qu'un dispositif pour maintenir une circulation d'eau souterraine de l'entrée pour l'eau (6) à la sortie pour l'eau (11), ainsi qu'un tube de pression, qui débouche dans le tube formant puits (21) sous la forme d'un tube d'injection (9), par la section d'extrémité (8) duquel peut être introduit le gaz d'extraction, et comportant une chambre de séparation (2), formée à l'extrémité supérieure (12b) du tube enveloppe (12) et qui est limitée par un couvercle (19), qui ferme l'extrémité supérieure (12b) du tube enveloppe (12), le gaz d'extraction remontant dans la chambre de séparation (2) et pouvant être évacué par l'intermédiaire d'une sortie pour l'air (13), caractérisé en ce que le tube de convoyage (7) est ouvert à son extrémité supérieure (30) et que le couvercle (19) de l'extrémité fermée (12b) du tube enveloppe (12) est située à une certaine distance axiale du bord de débordement (3) de l'extrémité supérieure (30) du tube de convoyage (7).

2. Dispositif selon la revendication 1, caractérisé en ce que la sortie pour l'eau (11) est disposée de préférence entièrement au-dessous du niveau (GW) de l'eau souterraine.

3. Dispositif selon la revendication 1 ou 2, caractérisé en ce que le tube d'injection (9) débouche coaxialement dans le tube de convoyage (7) au-dessous du niveau (GW) de l'eau souterraine, de préférence au-dessous de l'extrémité inférieure (12a) du tube enveloppe (12).

4. Dispositif selon la revendication 1 ou 2, caractérisé en ce que la section d'extrémité (8) du tube d'injection (9) débouche dans l'espace annulaire présent entre le tube de convoyage et le tube enveloppe, au-dessous du niveau (GW) de l'eau souterraine, et est raccordée de préférence à un distributeur d'air (17), notamment le bord (3) de l'extrémité ouverte (30) du tube de convoyage étant situé légèrement au-dessus du niveau (GW) de l'eau souter-raine.

5. Dispositif selon la revendication 1 ou 2, caractérisé en ce que le dispositif est formé d'une pompe à liquide (8a,15) disposée de préférence dans le tube de convoyage (7).

6. Dispositif selon la revendication 5, caractérisé en ce que la pompe est agencée sous la forme d'une pompe d'injection (8a), à laquelle le gaz d'extraction est envoyé en tant que moyen d'entraînement et que la pompe d'injection (8a) est portée de préférence par un corps flottant (20).

7. Dispositif selon la revendication 5, caractérisé en ce que la pompe est une pompe mécanique (15), dont le tube de refoulement (24) se termine dans une buse (16).

8. Dispositif selon l'une des revendications 5 à 7, caractérisé en ce que le jet (4a) de la pompe à liquide (8a,15) est dirigé vers une plaque d'impact (18) disposée de préférence au-dessus de l'extrémité (30) du tube de convoyage, la plaque d'impact (18) étant située notamment dans l'espace de séparation (2).
